# EUROPÄISCHE PATENTSCHRIFT

(11) **EP 0 666 094 B1**
(45) Veröffentlichungstag und Bekanntmachung des Hinweises auf die Patenterteilung: **03.12.1997**
(21) Anmeldenummer: 95100434.0
(22) Anmeldetag: 13.01.1995
(51) Int. Cl.: B01D 29/21, B01D 37/02

(54) **Filterkerze**
Filter candle
Bougie filtrante

(30) Priorität: 17.01.1994 DE 4401116
(43) Veröffentlichungstag der Anmeldung: 09.08.1995
(73) Patentinhaber: Faudi Filtersysteme GmbH, 35260 Stadtallendorf (DE)
(72) Erfinder: Bugarski, Michael, D-65510 Idstein (DE); Künszberg, Eberhard v., D-61273 Wehrheim (DE)
(74) Vertreter: Katscher, Helmut, Dipl.-Ing.

(56) Entgegenhaltungen:
- DE-B- 1 278 404
- GB-A- 2 230 205
- GB-A- 2 239 401
- US-A- 4 902 427

## Beschreibung

Die Erfindung betrifft eine Filterkerze für Flüssigkeits-Feinstfilter, mit einem innenliegenden, perforierten Stützrohr, das von einem Trägermaterial für mindestens eine Schicht von pulverförmigem Filterhilfsmittel umgeben ist.

Für die Feinstfiltration von Flüssigkeiten werden pulverförmige Filterhilfsmittel verwendet, beispielsweise Kieselgur. Das Filterhilfsmittel wird auf dem porösen Trägermaterial der Filterkerze angeschwemmt. Der so gebildete Kuchen aus angeschwemmtem Filterhilfsmittel dient als Filterschicht, in der die feinsten in der Flüssigkeit enthaltenen Feststoffpartikel aufgefangen und abgelagert werden.

Zur Regeneration derartiger bekannter Filterkerzen ist es erforderlich, den aus dem Filterhilfsmittel und den ausgefilterten Verunreinigungen bestehenden Filterkuchen von der Filterkerze zu entfernen. Dies kann durch mechanische Rüttelbewegungen, Verformungen der Filterkerze und/oder einen Rückspülvorgang erfolgen. Allen diesen Verfahren ist gemeinsam, daß anschließend eine neue Schicht von Filterhilfsmittel an der Außenseite der Filterkerze angeschwemmt werden muß, bevor eine erneute Filtration erfolgen kann.

Eine andere Art der Filtration, bei der auf das Anschwemmen von Filterhilfsmitteln verzichtet werden kann, erfordert die Verwendung von Filterkerzen, deren Filterfläche von einem Stapel von ringförmigen Scheiben aus Glasfasermaterial gebildet wird. Die Herstellung derartiger Filterkerzen ist deshalb sehr aufwendig; sie genügen jedoch nicht in allen Fällen den Anforderungen an eine Feinstfiltration.

Daneben ist es auch bekannt, Filterkerzen mit einer mehrlagigen Wicklung einer Glasfasermatte zu versehen. Diese Filterkerzen können zwar verhältnismäßig kostengünstig hergestellt werden; sie sind jedoch nicht für die Feinstfiltration geeignet.

Aufgabe der Erfindung ist es daher, eine Filterkerze der eingangs genannten Gattung so auszubilden, daß bei verhältnismäßig einfachem Aufbau und einfacher Herstellung eine wirksame Feinstfiltration und eine Regenerierung der Filterkerze ohne die Notwendigkeit der Anschwemmung von Filterhilfsmittel ermöglicht wird.

Diese Aufgabe wird erfindungsgemäß dadurch gelost, daß um das Stützrohr eine Trägermatte aus porösem Material gewickelt ist und daß zwischen den einzelnen Windungen der Trägermatte eine Schicht aus Filterhilfsmittel angeordnet ist.

Diese Schicht aus Filterhilfsmittel, beispielsweise pulverförmigem Kieselgur, wird bei der Herstellung der Filterkerze einmalig aufgebracht und verbleibt in der Filterkerze. Die Regeneration erfolgt durch einfache Rückspülung, wobei das Filterhilfsmittel zwischen den einzelnen Windungen der Trägermatte verbleibt und nicht erneut angeschwemmt werden muß. Auch feinste Verunreinigungen werden bei der Filtration in der Schicht aus Filterhilfsmittel zurückgehalten und werden bei der Regeneration aus dieser Schicht herausgespült, ohne daß ein Verlust des in der Filterkerze eingebetteten Filterhilfsmittels erfolgt.

Die so gestaltete Filterkerze ermöglicht eine hohe spezifische Filterflächenbelastung. Die Herstellung erfolgt einfach und mit geringen Fertigungskosten. Das pulverförmige Filterhilfsmittel wird auf die liegende Trägermatte trocken aufgeschüttet; die so geschichtete Trägermatte wird sodann um das Stützrohr gewickelt. Vorzugsweise wird der aus der Trägermatte und der Schicht von Filterhilfsmittel gebildete Wickel von einer durchlässigen Stützhülle umgeben.

Die gemäß einer bevorzugten Ausführungsform der Erfindung aus einer Glasfasermatte bestehende Trägermatte kann stattdessen auch aus einem anderen faserigen bzw. porösen Material bestehen, das eine ausreichende Stützfunktion für das aufgebrachte Filterhilfsmittel ergibt. Die Porosität der Trägermatte muß nur so gewählt werden, daß das Filterhilfsmittel zurückgehalten wird. Außer Glasfasermaterial können vorteilhaft beispielsweise verwendet werden: Mineralfasermatten, Kunststoffasermatten, Keramikpapier, Gewebe, Sintermaterialien, Membranen oder Metallgewebe.

Vorzugsweise ist das Stützrohr in eine Vlieseinlage eingehüllt.

Nachfolgend wird ein Ausführungsbeispiel der Erfindung näher erläutert, das in der Zeichnung dargestellt ist. Es zeigt:

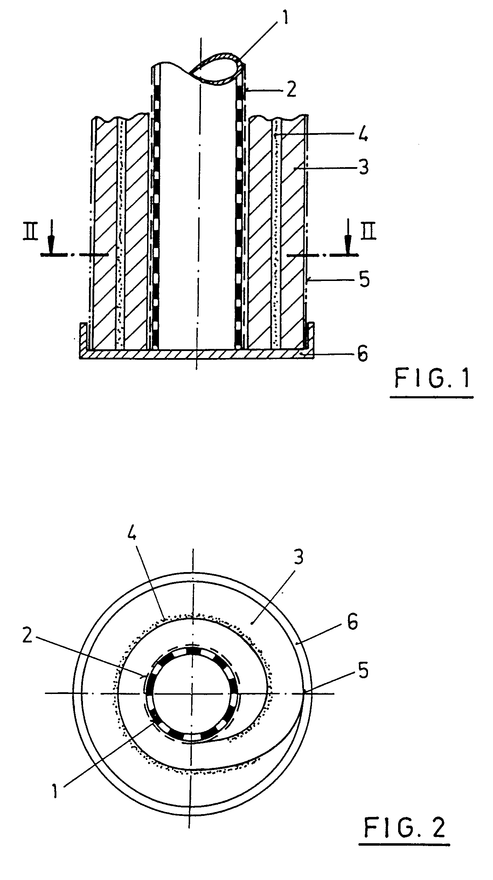

Fig. 1 einen Abschnitt einer Filterkerze im Längsschnitt und
Fig. 2 einen Schnitt längs der Linie II-II in Fig. 1.

Die in der Zeichnung dargestellte Filterkerze, die zur Verwendung in einem Flüssigkeits-Feinstfilter bestimmt ist, weist ein innenliegendes, perforiertes Stützrohr 1 auf, das in eine Vlieslage 2 eingehüllt ist. Eine Trägermatte 3 aus porösem Material, beim dargestellten Ausführungsbeispiel aus einer Glasfasermatte, ist mit einer Schicht 4 aus einem pulverförmigem Filterhilfsmittel beschichtet, beim dargestellten Ausführungsbeispiel aus Kieselgur.

Die so beschichtete Trägermatte 3 ist um das Stützrohr 1 gewickelt, so daß die Schicht 4 aus Filterhilfsmittel zwischen den einzelnen Windungen der Trägermatte 3 liegt.

Wie man aus der Zeichnung erkennt, ist die Trägermatte 3 beim dargestellten Ausführungsbeispiel in zwei Windungen um das Stützrohr 1 gewickelt, wobei die Schicht 4 aus Filterhilfsmittel zwischen diesen beiden Windungen der Trägermatte 3 liegt; dabei überlappen sich die beiden Enden der Schicht 4.

Der aus der Trägermatte 3 und der Schicht 4 von Filterhilfsmittel gebildete Wickel ist von einer durchlässigen Stützhülle 5 umgeben, die bei dem dargestellten Ausführungsbeispiel aus einem Kunststoffgewebeband besteht, das um die Filterkerze gewickelt ist.

Die so aufgebaute Filterkerze ist an ihren beiden Enden jeweils mit angegossenen Endscheiben versehen, von denen in der Zeichnung nur die eine Endscheibe 6 dargestellt ist. Die andere, nicht dargestellte Endscheibe weist eine zentrale Öffnung auf, durch die das Stützrohr 1 hindurchtritt, um einen Auslaß für die filtrierte Flüssigkeit zu bilden.

Beim Filtriervorgang durchströmt die zu filtrierende Flüssigkeit die Filterkerze von außen nach innen, wobei sich die Verunreinigungen an und in der Schicht 4 aus Filterhilfsmittel festsetzen. Zur Regenration wird ein Rückspülvorgang durchgeführt, bei dem Flüssigkeit aus dem Stützrohr 1 von innen nach außen durch die Filterkerze strömt und dabei die in der Schicht 4 enthaltenen Verunreinigungen entfernt. Die Filterkerze steht danach für einen erneuten Filtriervorgang zur Verfügung.

Anstelle der beim dargestellten Ausführungsbeispiel für die Trägermatte 3 verwendeten Glasfasermatte können auch andere faserige bzw. poröse Materialien verwendet werden, deren Porosität ausreichend fein ist, um das die Schicht 4 bildende Filterhilfsmittel zurückzuhalten. Beispiele für solche Materialien sind Mineralfasermatten, Kunststoffasermatten, Keramikpapier, Sintermaterial, poröse Membranen oder Gewebe, wobei auch Metallgewebe verwendet werden können.

## Patentansprüche

1. Filterkerze für Flüssigkeits-Feinstfilter, mit einem innenliegenden, perforierten Stützrohr (1), das von einem Trägermaterial für mindestens eine Schicht von pulverförmigem Filterhilfsmittel umgeben ist, dadurch gekennzeichnet, daß um das Stützrohr (1) eine Trägermatte (3) aus porösem Material gewickelt ist und daß zwischen den einzelnen Windungen der Trägermatte (3) eine Schicht (4) aus Filterhilfsmittel angeordnet ist.

2. Filterkerze nach Anspruch 1, dadurch gekennzeichnet, daß der aus der Trägermatte (3) und der Schicht (4) von Filterhilfsmittel gebildete Wickel von einer durchlässigen Stützhülle (5) umgeben ist.

3. Filterkerze nach Anspruch 1, dadurch gekennzeichnet, daß das Stützrohr (1) in eine Vlieslage (2) eingehüllt ist.

4. Filterkerze nach Anspruch 1, dadurch gekennzeichnet, daß die Trägermatte (3) aus einer Glasfasermatte besteht.

5. Filterkerze nach Anspruch 1, dadurch gekennzeichnet, daß die Trägermatte (3) aus einer Mineralfasermatte besteht.

6. Filterkerze nach Anspruch 1, dadurch gekennzeichnet, daß die Trägermatte (3) aus einer Kunststoffasermatte besteht.

7. Filterkerze nach Anspruch 1, dadurch gekennzeichnet, daß die Trägermatte (3) aus Keramikpapier besteht.

8. Filterkerze nach Anspruch 1, dadurch gekennzeichnet, daß die Trägermatte (3) aus Gewebe besteht.

9. Filterkerze nach Anspruch 1, dadurch gekennzeichnet, daß die Trägermatte (3) aus Sintermaterial besteht.

10. Filterkerze nach Anspruch 1, dadurch gekennzeichnet, daß die Trägermatte (3) aus einer Membran besteht.

11. Filterkerze nach Anspruch 1, dadurch gekennzeichnet, daß die Trägermatte (3) aus Metallgewebe besteht.

12. Filterkerze nach Anspruch 1, dadurch gekennzeichnet, daß das Filterhilfsmittel aus Kieselgur besteht.

## Claims

1. Filter candle for ultra-fine liquid filters, having an internal, perforated supporting tube (1) that is surrounded by a carrier for at least one layer of powdery filtration accelerator, characterised in that a supporting mat (3) of porous material is wound round the supporting tube (1) and that a layer (4) of filtration accelerator is arranged between the individual windings of the supporting mat (3).

2. Filter candle according to claim 1, characterised in that the winding formed of the supporting mat (3) and the layer (4) of filtration accelerator, is surrounded by a permeable supporting jacket (5).

3. Filter candle according to claim 1, characterised in that the supporting tube (1) is encased in a non-woven layer (2).

4. Filter candle according to claim 1, characterised in that the supporting mat (3) is made up of a glass fibre mat.

5. Filter candle according to claim 1, characterised in that the supporting mat (3) is made up of a mineral fibre mat.

6. Filter candle according to claim 1, characterised in that the supporting mat (3) is made up of a fabric filter mat.

7. Filter candle according to claim 1, characterised in that the supporting mat (3) is made up of ceramic paper.

8. Filter candle according to claim 1, characterised in that the supporting mat (3) is made up of woven fabric.

9. Filter candle according to claim 1, characterised in that the supporting mat (3) is made up of sinter material.

10. Filter candle according to claim 1, characterised in that the supporting mat (3) is made up of a membrane.

11. Filter candle according to claim 1, characterised in that the supporting mat (3) is made up of metal fabric.

12. Filter candle according to claim 1, characterized in that the filtration accelerator is made up of kieselguhr.

## Revendications

1. Bougie filtrante pour filtre fin de liquides, comportant un tube d'appui intérieur perforé (1), qui est entouré d'une matière de support pour au moins une couche d'agent filtrant pulvérulent, caractérisée en ce qu'une natte de support (3) constituée d'une matière poreuse est enroulée autour du tube d'appui (1) et en ce qu'une couche (4) d'agent filtrant est agencée entre les enroulements individuels de la natte de support (3).

2. Bougie filtrante selon la revendication 1, caractérisée en ce que l'enroulement formé de la natte de support (3) et de la couche (4) d'agent filtrant est entouré d'une gaine d'appui perméable (5).

3. Bougie filtrante selon la revendication 1, caractérisée en ce que le tube d'appui (1) est gainée d'une couche non tissée (2).

4. Bougie filtrante selon la revendication 1, caractérisée en ce que la natte de support (3) est constituée d'une natte de fibres de verre.

5. Bougie filtrante selon la revendication 1, caractérisée en ce que la natte de support (3) est constituée d'une natte de fibres minérales.

6. Bougie filtrante selon la revendication 1, caractérisée en ce que la natte de support (3) est constituée d'une natte de fibres synthétiques.

7. Bougie filtrante selon la revendication 1, caractérisée en ce que la natte de support (3) est constituée de papier céramique.

8. Bougie filtrante selon la revendication 1, caractérisée en ce que la natte de support (3) est constituée d'un tissu.

9. Bougie filtrante selon la revendication 1, caractérisée en ce que la natte de support (3) est constituée d'une matière frittée.

10. Bougie filtrante selon la revendication 1, caractérisée en ce que la natte de support (3) est constituée d'une membrane.

11. Bougie filtrante selon la revendication 1, caractérisée en ce que la natte de support est constituée d'un tissu métallique.

12. Bougie filtrante selon la revendication 1, caractérisée en ce que l'agent filtrant est constitué de kieselguhr.
